# EUROPÄISCHE PATENTSCHRIFT

(11) **EP 3 758 150 B1**
(45) Veröffentlichungstag und Bekanntmachung des Hinweises auf die Patenterteilung: **31.08.2022**
(21) Anmeldenummer: 19305865.8
(22) Anmeldetag: 27.06.2019
(51) Int. Cl.: H01R 4/36, H01R 4/70, H01R 11/09, H02G 15/18

(54) **VERBINDUNGSELEMENT FÜR EINE VERBINDUNGSGARNITUR FÜR ENERGIEKABEL**
CONNECTION ELEMENT FOR AN ENERGY CABLE CONNECTION SET
ELEMENT DE CONNECTION POUR UNE GARNITURE DE RACCORDEMENT DE CABLES D'ENERGIE

(43) Veröffentlichungstag der Anmeldung: 30.12.2020
(73) Patentinhaber: Nexans, 92400 Courbevoie (FR)
(72) Erfinder: STAUCH, Gert, 95032 HOF (DE); LANGOWSKI, Jörg, 47259 DUISBURG (DE); VOGEL, Sylke, 95189 KÖDITZ (DE); MARKGRAF, Volker, 95195 RÖSLAU (DE)
(74) Vertreter: Ipsilon

(56) Entgegenhaltungen:
- EP-A1- 3 001 523
- EP-A1- 3 098 920
- EP-A2- 1 158 639
- US-A1- 2013 295 790
- US-A1- 2017 085 075

## Beschreibung

### Gebiet

Die Erfindung betrifft eine Verbindungsgarnitur zur Verbindung von Energiekabeln, insbesondere Mittelspannungs-Energiekabeln, mit einem Verbindungselement und einer das Verbindungselement umhüllende kaltschrumpfenden Muffe.

### Hintergrund

Energiekabel können nur bis zu einer bestimmten Höchstlänge in einem Stück transportiert werden, die unter anderem durch das Gewicht und den Durchmesser einer das Kabel aufnehmenden Kabelspule oder Kabelrolle bestimmt wird. Gewicht und Durchmesser hängen von den zur Verfügung stehenden Transportmitteln und den zu nutzenden Transportwegen ab. Um Energiekabel über größere Entfernungen zu verlegen ist es daher notwendig, mehrere Energiekabel miteinander leitend zu verbinden. Eine Verbindung von Energiekabeln kann auch dann nötig sein, wenn zum Beispiel bei Erdarbeiten ein Kabel unterbrochen oder beschädigt wurde.

Die Verbindung der Leiter von Energiekabeln kann beispielweise mittels Schraubverbindungen erfolgen. Dabei werden zwei freigelegte Leiterenden von gegenüberliegenden Seiten in eine elektrisch leitende Hülse eingebracht und mittels radial in die Hülse einschraubbaren Schrauben in der Hülse fixiert. Die elektrisch leitende Hülse kann von einem Muffenisolierkörper umhüllt sein. Eine solche Verbindung ist bspw. in der EP 1 158 639 A2 gezeigt, die als nächstliegender Stand der Technik angesehen wird.

Bei der bekannten Verbindung werden die Schraublöcher in der Hülse nach der Montage mittels einer Isoliermanschette abgedeckt.

Aus der US 2013/295790 A1 ist eine andere Verbindung für Energiekabel bekannt, bei der jedes Kabelende mit einem von zwei miteinander verbindbaren Konnektoren verbunden wird. Die Konnektoren können mittels einer Schraubverbindung lösbar miteinander verbunden werden. Die miteinander verbundenen Konnektoren können mit einer Manschette aus einem leitfähigen Elastomer umhüllt werden.

Energiekabel führen in der Regel hohe Spannungen und hohe Ströme. Außerdem können Energiekabel mit einer über einer Isolierung liegenden äußeren elektrischen Leitschicht versehen sein. Gerade bei hohen Spannungen ist es erforderlich, die an Unstetigkeiten der Kabelgeometrie und/oder des Kabelaufbaus auftretenden elektrischen Felder zwischen dem Leiter und dem Schirm mittels geeigneter Maßnahmen zu kontrollieren, so dass sichergestellt ist, dass die größte zulässige elektrische Feldstärke in der Isolierung des Energiekabels nicht erreicht oder gar überschritten wird.

Bei der Verbindung oder dem Abschluss von Mittelspannungskabeln wird durch das Absetzen des Kabelmantels und der äußeren Leitschicht des Kabels der Aufbau des Kabels gestört und das elektrische Feld wird an bestimmten Stellen stark inhomogen wobei sich der Betrag der elektrischen Feldstärke stark erhöht und die Gefahr von Teilentladungen sowie von Durch- oder Überschlägen besteht.

Die Aufgabe der Feldsteuerung besteht darin, den stark inhomogenen Feldverlauf am Kabelende so zu beeinflussen, dass die hohen Feldstärken auf unkritische Werte abgebaut werden.

Für Mittelspannungsgarnituren eignet sich dafür besonders die refraktive Feldsteuerungsmethode. Verglichen mit anderen Methoden ermöglicht sie eine schlankere und kompaktere Bauweise des Feldsteuerungskörpers und bietet eine größere Toleranz gegenüber falscher Positionierung und Kabelvorbereitung.

Die refraktive Feldsteuerung basiert auf der Beeinflussung des elektrischen Feldes durch die Kombination von zwei Isolierstoffen mit unterschiedlichen Dielektrizitätskonstanten. Dazu ordnet man den Isolierstoff mit der höheren Dielektrizitätskonstante im Bereich mit der hohen elektrischen Feldstärke an. Die Bezeichnung "refraktiv" rührt daher, dass elektrische Feldlinien, die schräg durch eine Grenzfläche solcher Stoffe treten, abgelenkt werden.

Bei der Nutzung dieses Prinzips in Mittelspannungskabelgarnituren wird im Bereich über der Absetzkante der äußeren Leitschicht (bei kunststoffisolierten Kabeln) oder der Höchstädter Folie bzw. Bleimantel (bei papierisolierten Kabeln) und der Aderisolierung eines abgesetzten Kabels eine dünne Feldsteuer- Isolierschicht angeordnet, die eine deutlich höhere relative Dielektrizitätszahl εᵣ als der eigentliche Kabelisolierstoff aufweist. Dadurch wird eine gezielte Reduktion der ursprünglichen Feldstärke erreicht.

Neben der Feldsteuerung selbst ist die montagebedingte Gestaltung der Grenzflächen zwischen Kabelisolierung und Garnitur von großer Bedeutung. Lufteinschlüsse können besonders im Bereich der Feldsteuerung schon bei geringen Spannungen zu Teilentladungen und damit zum Ausfall der Kabelgarnitur führen.

Bekannte Mittelspannungsmuffen, die über einer Verbindungsstelle zweier Kabel montiert werden, bestehen aus drei koaxialen Schichten. Von außen nach innen sind das die äußere Feldbegrenzung, die Isolierung und die Feldsteuerung. Im Bereich des Verbinders, der die Leiter der Kabel elektrisch verbindet, ist eine mit leitfähigem Lack überzogene Hülse aufgebracht. Die Hülse umhüllt Lufteinschlüsse zwischen der Kabelisolierung und dem Verbinder sowie kantige Konturen, an denen ebenfalls überhöhte elektrische Feldstärken auftreten können. Die Muffe muss mit zum Teil erheblichem Kraftaufwand aufgeschoben werden, um einen sicheren Abschluss gegen Umwelteinflüsse zu erreichen. Dabei besteht die Gefahr, dass die lackierte Glättungshülse beschädigt wird. Für die Muffe wird außerdem eine Parkposition auf dem Kabel benötigt, wozu dessen Schirm in einem größeren Bereich entfernt werden muss. Die erforderliche Einbaulänge der bekannten Aufschiebemuffe ist deshalb größer als bei anderen Bauformen, bspw. Warm- oder Kaltschrumpfmuffen.

Kaltschrumpfmuffen weisen ebenfalls drei Schichten auf: die äußere Feldbegrenzungsschicht, die Isolierung, und die Feldsteuerungsschicht. Eine solche Muffe ist bspw. aus der EP 3 098 920 A1 bekannt, die ein schrumpfbares Rohr mit einer äußeren leitfähigen Schicht, einer inneren Schicht aus einem feldsteuernden Material und einer dazwischen liegenden Isolierschicht zeigt. Um den Verbinder wird anstelle der mit leitfähiger Farbe überzogenen Hülse eine leitfähige Platte aus einem Elastomer gelegt. Die feldsteuernde Schicht der Muffe hat eine nur leicht erhöhte Permittivität (Dielektrizitätszahl) gegenüber der Isolierung des Kabels bzw. der Isolierung der Muffe. Das genügt häufig nicht, um die elektrische Feldstärke im Bereich scharfer Kanten in ausreichendem Maße zu reduzieren. Deshalb wird um die Absetzkante des Kabels zusätzlich feldsteuerndes Mastik gewickelt. Die leitfähige Platte und deren Kanten sind ebenfalls mit solchem Mastik umwickelt.

Kaltschrumpfmuffen haben in ihrem Inneren einen Stützkörper, der die elastische Muffe radial nach außen spannt und so einen gegenüber einem geschrumpften Zustand vergrößerten Innendurchmesser sicherstellt. Die US 2017/085075 A1 zeigt eine kaltschrumpfende Muffe einer Verbindungsgarnitur für Energiekabel mit einer über einem entfernbaren Stützkörper angeordneten inneren Schicht aus einem verformbaren Material mit hoher elektrischer Permittivität und einem rohrförmigen Elastomerkorpus, der von einer halbleitenden Schicht umhüllt ist. Der Stützkörper wird nach der Platzierung der Muffe über der Verbindungsstelle entfernt, so dass sich der Durchmesser der Muffe im Wesentlichen radial nach innen verkleinert. Der Stützkörper kann bspw. eine spiralförmige Anordnung beinhalten, die an einem Ende beginnend zu einer Seite oder in der Mitte beginnend zu beiden Seiten aus der Muffe entfernt wird. Wenn der gesamte Stützkörper entfernt ist liegen die Enden der Muffe an dem von ihr umhüllten Kabelmantel an. Die Innenseite der Muffe kann ganz oder teilweise, bspw. an ihren Enden, mit einem Klebstoff beschichtet sein, der die Dichtigkeit zwischen der Muffe und dem Kabelmantel erhöht und ein Verschieben nach der Montage zusätzlich erschwert.

Die bekannten Lösungen erfordern vergleichsweise einen hohen Arbeitsaufwand und viele Arbeitsschritte. Außerdem können Montagefehler durch unsachgemäßes Anbringen der einzelnen Komponenten auftreten, die die Funktion der Verbindung beeinträchtigen.

Hiervon ausgehend hat die vorliegende Erfindung die Aufgabe, eine Energiekabel-Verbindungsgarnitur zu schaffen, die eines oder mehrere der eingangs genannten Probleme überwindet oder zumindest verkleinert.

### Zusammenfassung der Erfindung

Zur Lösung dieser Aufgabe schlägt die Erfindung nach einem ersten Aspekt ein Verbindungselement einer Verbindungsgarnitur für Energiekabel vor, welches einen elektrisch leitenden Schraubverbinder aufweist, der dazu eingerichtet ist, an zwei gegenüberliegenden Enden jeweils einen Leiter zweier zu verbindender Energiekabel aufzunehmen und mittels radial in den Schraubverbinder einschraubbarer Schrauben elektrisch stromtragfähig zu kontaktieren und zu fixieren. Der Schraubverbinder kann vorzugsweise eine im Wesentlichen zylindrische Form aufweisen, aber auch vieleckige hülsenartige Grundformen sind möglich. An den offenen Enden kann der Schraubverbinder angefast, verjüngt und/oder abgerundet ausgeführt sein. Die Schrauben sind so gewählt, dass sie nach dem Kontaktieren und Fixieren der Leiter in dem Schraubverbinder nicht oder nur unwesentlich über dessen äußere Kontur hinausragen. Geeignete Schrauben sind beispielsweise Abreißschrauben, deren über die Kontur des Schraubverbinders hinausragende Teile abgeschert werden, oder Madenschrauben, deren oberes Ende vollständig in dem Gewinde aufgenommen wird. Es ist aber auch möglich, in dem Schraubverbinder Vertiefungen vorzusehen, welche Schraubenköpfe im eingeschraubten Zustand vollständig aufnehmen. Das Verbindungselement umfasst außerdem eine um eine Längsachse des elektrisch leitenden Schraubverbinders bewegliche, an diesem anliegende und diesen umhüllende, elektrisch leitfähige Hülse, die eine weitgehend glatte bzw. von kantigen Konturen freie Oberfläche aufweist. Die Hülse ist vorzugsweise aus einem leitfähigen Elastomer oder einem anderen leitfähigen sowie elastisch oder plastisch verformbaren Material gefertigt. Die Länge der Hülse ist größer als die des Schraubverbinders, und zumindest die über den Schraubverbinder hinausragenden Bereiche sind so gestaltet, dass sie radial verformbar sind. Dies kann bspw. durch das Material der Hülse und/oder durch eine geeignete Einstellung der Wanddicke der Hülse in den über den Schraubverbinder herausragenden Bereichen erreicht werden. Die Hülse weist außerdem in einem die Schrauben aufnehmenden Bereich des Schraubverbinders Öffnungen auf, durch welche die Schrauben in den Schraubverbinder eindrehbar sind. Sobald die Schrauben in den Schraubverbinder eingedreht sind und nicht mehr über die äußere Kontur des Schraubverbinders hinausragen kann die Hülse um die Längsachse des Schraubverbinders gedreht werden, um die Öffnungen über einem glatten Bereich des Schraubverbinders zu positionieren. Die Hülse ist vorzugsweise auch im Bereich des Schraubverbinders oder zumindest im Bereich der Öffnungen dünnwandig, damit keine nennenswerte Kante entsteht. Die elastische oder plastische Verformbarkeit der Hülse kann es ermöglichen, die Hülse auch dann zu drehen, wenn Teile der in den Schraubverbinder eingedrehten Schrauben geringfügig über die Kontur des Schraubverbinders hinausragen. Die Hülse weist vorzugsweise keine selbstschrumpfenden Eigenschaften auf.

Die Kanten der Hülse und der Öffnungen darin können abgerundet oder angeschrägt ausgeführt sein, so dass keine scharfen Kanten vorliegen, die eine lokale Überhöhung der Feldstärke hervorrufen könnten.

Bei einer Ausführungsform des Verbindungselements sind die über den Schraubverbinder hinausragenden Bereiche der Hülse über den Schraubverbinder zurückklappbar, sodass die offenen Enden der Hülse und die offenen Enden des Schraubverbinders nahe beieinander liegen. Bei dieser Ausführungsform, die insbesondere bei mehrbereichsfähigen Schraubverbindern vorteilhaft sein kann, also bei Schraubverbindern die für eine große Zahl unterschiedlicher Leiterquerschnitte geeignet sind, wird durch die zurückgeklappten Bereiche das Einbringen von Zentrierringen oder Einlagen in den Schraubverbinder erleichtert. Zentrierringe oder Einlagen sollen Leiter mit kleineren Querschnitten definiert aus dem Schraubverbinder herausführen und so Asymmetrien des elektrischen Feldes verringern oder vermeiden.

Das Verbindungselement kann vorteilhafterweise bereits werksseitig mit zurückgeklappten Bereichen der Hülse sowie bereits teilweise in den Schraubverbinder eingedrehten Schrauben ausgeliefert werden, so dass die Anzahl der am Montageort notwendigen Arbeitsschritte weiter reduziert wird.

Eine Verbindungsgarnitur für Energiekabel gemäß einem zweiten Aspekt der Erfindung weist ein erfindungsgemäßes Verbindungselement und eine kaltschrumpfende Muffe mit einem entfernbaren, innenliegenden Stützelement auf, das die Muffe in einem radial nach außen gespannten Zustand hält. Das Stützelement kann beispielsweise durch eine innenliegende Spirale gebildet sein, oder aus zwei oder mehr Teilschalen, die sich gegeneinander abstützen und die Muffe nach außen radial spannen, so dass die Muffe eine im Wesentlichen zylindrische Grundform aufweist. Die Muffe selbst weist eine außen auf dem Stützelement angeordnete erste innere Schicht auf, die aus einem fließfähigen und/oder leicht verformbaren, feldsteuerndem Material besteht, beispielsweise eine Mastik-Schicht. In diesem Kontext wird unter fließfähigem Material ein zähfließendes Material verstanden. Ein leicht verformbares Material bedeutet in diesem Kontext ein Material, das sich einer Kontur durch Verformung leicht anpasst. Bekanntes Mastik-Material erfüllt diese Anforderungen, aber es ist auch möglich, Elastomere mit den geforderten Eigenschaften zu verwenden. Die feldsteuernde Eigenschaft des Materials wird durch dessen Dielektrizitätskonstante sowie dessen Anordnung zu Absetzkanten und anderen Bereichen mit feldverändernden Geometrien der Kabelverbindung und ihrer Elemente bestimmt. Außen über der ersten inneren Schicht ist eine elektrische Isolierschicht angeordnet, über der sich eine elektrisch leitfähige Feldbegrenzungsschicht befindet. Bei einigen Ausführungsformen kann zwischen der ersten inneren Schicht und der elektrischen Isolierschicht eine weitere feldsteuernde Schicht angeordnet sein.

Die Muffe gewährleistet die Isolierung der unter elektrischer Spannung stehenden Leiter der Kabel und des Schraubverbinders gegenüber dem Erdpotenzial. Dazu muss der Isolierstoff eine genügend hohe elektrische Festigkeit aufweisen. Geeignete Isolierstoffe umfassen bspw. Ethylen-Propylen-Dien-Kautschuk (EPDM) oder Silikon-Kautschuk bzw. Silikon-Elastomere. Die feldsteuernde Schicht reduziert die größte auftretende Feldstärke an Kanten und verhindert einen elektrischen Durchschlag der Kabelisolierung an der Schälkante, entlang der Grenzfläche zwischen Kabelisolierung und Isolierung der Muffe sowie der Isolierung über dem Verbindungselement.

Die Muffe mit ihren unterschiedlichen Schichten kann beispielsweise mittels Co-Extrusion in einem einzigen Arbeitsgang hergestellt sein.

Das vorstehend beschriebene Verbindungselement und die ebenfalls vorstehend beschriebene kaltschrumpfende Muffe bilden zusammen Elemente einer erfindungsgemäßen Verbindungsgarnitur für Energiekabel.

Ein Verfahren zur Verbindung von Energiekabeln mit einer erfindungsgemäßen Verbindungsgarnitur umfasst zunächst das Absetzen oder Abschälen der die Leiter zweier zu verbindender Energiekabel umgebenden Isolierung sowie gegebenenfalls weiterer Schichten, bis ein ausreichend langes Teilstück des Leiters freigelegt ist. Die Länge des freigelegten Leiters richtet sich nach der Länge der den Leiter aufnehmenden Öffnung des Schraubverbinders. Ein sich an den freigelegten Leiter anschließender Teil der Isolierung wird ebenfalls von diese gegebenenfalls umgebenden weiteren Schichten befreit. Anschließend wird die kaltschrumpfende Muffe über eines der Kabelenden geschoben, sodass der freigelegte Leiter und ein freigelegter Teil der diesen umgebenden Isolierung aus der Muffe herausragt. Danach können die zu verbindenden Leiter in den Schraubverbinder des Verbindungselements eingeführt werden. Durch das maßgenaue Absetzen der Leiter und das Freilegen der Isolierung in dem sich an den freigelegten Leiter anschließenden Bereich des Kabels befinden sich zwischen den Isolierungen und dem Schraubverbinder nur kleine Lücken, die von den über den Schraubverbinder des Verbindungselements herausragenden Bereichen der Hülse überbrückt werden, sofern die über den Schraubverbinder des Verbindungselements herausragenden Bereiche der Hülse vor dem Einführen der Leiter in den Schraubverbinder nicht zurückgeklappt waren. Falls die über den Schraubverbinder des Verbindungselements herausragenden Bereiche der Hülse vor dem Einführen der Leiter in den Schraubverbinder zurückgeklappt waren werden diese Lücken nach dem Vorklappen der zurückgeklappten Bereiche überbrückt. Anschließend werden die Schrauben in den Schraubverbinder eingedreht bis sie abscheren oder nicht mehr über die Kontur des Schraubverbinders hinausragen und eine Drehung der um den Schraubverbinder liegenden Hülse nicht mehr verhindern. Nun wird die Hülse um den Schraubverbinder gedreht, sodass die die Schrauben aufnehmenden Bereiche des Schraubverbinders und ggf. darin vorhandene scharfkantige Konturen der Schrauben und eventuelle Lufteinschlüsse von der elektrisch leitfähigen Hülse überdeckt sind und die Öffnungen in der Hülse über einem glatten Bereich des Schraubverbinders liegen. Jetzt kann die Muffe über dem Verbindungselement positioniert und das Stützelement aus der Muffe entfernt werden, sodass die Muffe sich radial nach innen zusammenzieht. Eine durch die sich zusammenziehende Muffe ausgeübte Kraft drückt die über den Schraubverbinder herausragenden Bereiche der Hülse radial zusammen und gegen die Isolierungen der Leiter. Die Kraft bewirkt außerdem ein Fließen oder Eindringen der ersten inneren feldsteuerndem Schicht in die Öffnungen der Hülse und in Bereiche, in denen Kanten zwischen Schichten vorhanden sind, so dass keine Hohlräume zwischen dem Material der ersten inneren feldsteuernden Schicht und der Unterlage an der sie anliegt, also der Hülse, dem Schraubverbinder, der Isolierung und der Absetzkante vorhanden sind.

Die über den Schraubverbinder hinausragenden Bereiche der Hülse können bereits werksseitig zurückgeklappt sein, um beispielsweise das Einbringen von Zentrierringen oder Unterlagen in den Schraubverbinder zu erleichtern. Falls die Bereiche nicht bereits werksseitig zurückgeklappt sind können sie vor dem Einführen der Leiter in den Schraubverbinder zurückgeklappt werden, sofern erforderlich. Entsprechend müssen die Bereiche nach dem Eindrehen der Schrauben in den Schraubverbinder oder nach dem Drehen der Hülse um den Schraubverbinder wieder vorgeklappt werden, um Lücken zwischen dem Schraubverbinder und den Isolierungen der Kabel zu überbrücken.

Die erfindungsgemäße Verbindungsgarnitur für Energiekabel ermöglicht eine einfache Verbindung der Energiekabel, bei der Lufteinschlüsse und kantige Konturen im Bereich des Schraubverbinders leitfähig überdeckt sind und somit an diesen Stellen keine elektrischen Entladungen auftreten können. Das manuelle Umwickeln solcher Bereiche mit Mastik sowie das manuelle Umhüllen des Schraubverbinders mit einer Elastomer-Platte und gegebenenfalls einer Mastik-Schicht entfallen wegen der in die Muffe integrierten feldsteuernden Schicht, bspw. einer Mastik-Schicht, welche zusammen mit der Isolierschicht der Muffe eine refraktive Feldsteuerung bewirkt, die lokale Überhöhungen der elektrischen Feldstärke, bspw. am Übergang zwischen Hülse und Kabelisolierung, verhindert.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: zeigt eine erste exemplarische Ansicht eines erfindungsgemäßen Verbindungselements,
- Fig. 2: zeigt einen Längsschnitt durch das erfindungsgemäße Verbindungselement aus Figur 1,
- Fig. 3: zeigt einen Längsschnitt durch eine Ausführungsform des erfindungsgemäßen Verbindungselements aus Figur 1,
- Fig. 4: zeigt einen Längsschnitt durch die Ausführungsform des erfindungsgemäßen Verbindungselements aus Figur 3 mit eingeführten Leitern,
- Fig. 5: zeigt das erfindungsgemäße Verbindungselement aus Figur 4 nach dem Eindrehen und Abreißen der Schrauben,
- Fig. 6: zeigt das erfindungsgemäße Verbindungselement aus Figur 5 nach dem Drehen der Hülse,
- Fig. 7: zeigt einen Längsschnitt durch eine Leiterverbindung mit dem erfindungsgemäßen Verbindungselement aus Figur 4,
- Fig. 8: zeigt die in einer im Längsschnitt dargestellten kaltschrumpfenden Muffe positionierte Leiterverbindung mit dem Verbindungselement aus Figur 7,
- Fig. 9: zeigt die in einer im Längsschnitt dargestellten kaltschrumpfenden Muffe positionierte Leiterverbindung mit dem Verbindungselement aus Figur 7 nach dem Schrumpfen,
- Fig. 10: zeigt Längsschnitte durch Details der Leiterverbindung aus Figur 7 an den Enden des Verbindungselements, und
- Fig. 11: zeigt ein exemplarisches Flussdiagramm eines Verfahrens zur Verbindung von Energiekabeln mit einer erfindungsgemäßen Verbindungsgarnitur.

Gleiche oder ähnliche Elemente sind in den Figuren mit gleichen oder ähnlichen Bezugszeichen versehen.

### Ausführungsbeispiel

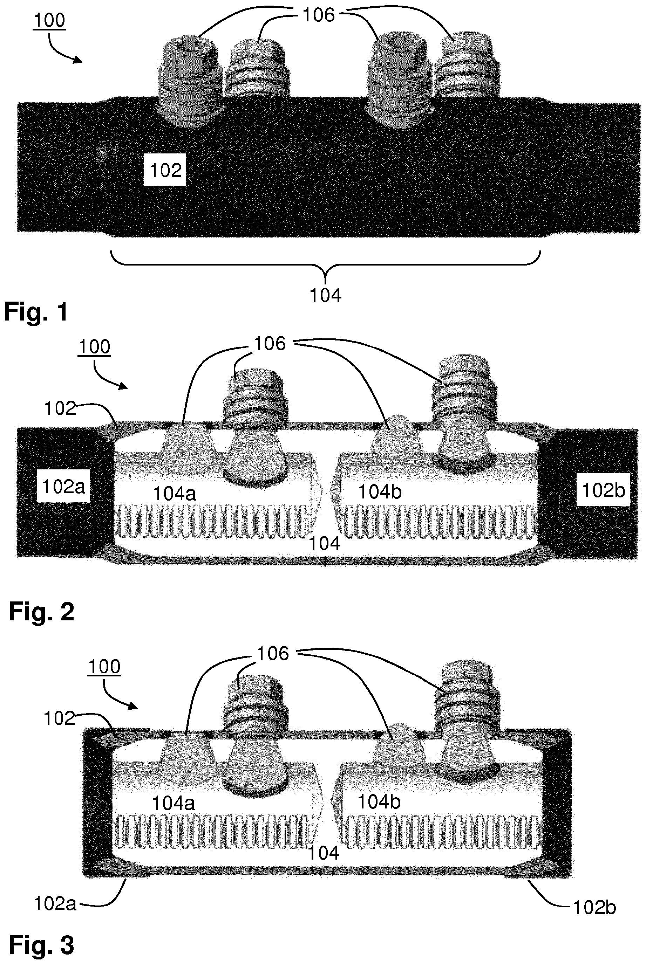

Figur 1 zeigt eine erste exemplarische Ansicht eines erfindungsgemäßen Verbindungselements 100. In der Figur ist der von der elektrisch leitenden Hülse 102 umgebene zylinderförmige Schraubverbinder 104 nicht direkt sichtbar. Es sind vielmehr nur die aus dem Schraubverbinder 104 herausragenden, noch nicht zur Fixierung der Leiter hineingedrehten Schrauben 106 zu sehen. Die in der Figur gezeigten Schrauben 106 sind Abreißschrauben, bei denen nach dem Festziehen der über die äußere Kontur des Schraubverbinders hinausstehende Teile abreißen bzw. abgeschert werden. Der Schraubverbinder 104 kann in dem in der Mitte liegenden Bereich mit dem größeren Durchmesser als an den beiden Enden lediglich erahnt werden; seine Erstreckung innerhalb der Hülle 102 ist durch die geschweifte Klammer angedeutet.

Figur 2 zeigt einen Längsschnitt durch das erfindungsgemäße Verbindungselement 100 aus Figur 1. in dieser Darstellung ist der Schraubverbinder 104 mit seinen beiden Aufnahmen 104a und 104b gut sichtbar dargestellt. Ebenfalls gut erkennbar ist der in die Aufnahmen 104a und 104b hineinragende Teil der Schrauben 106. Der Körper des Schraubverbinders 104 ist in der Figur in weißer Farbe dargestellt. Schraubverbinder 104 ist von der an den Schnittkanten grau dargestellten Hülse 102 umgeben, die in den Bereichen der Schrauben 106 entsprechende Öffnungen oder Durchbrüche aufweist. Die schwarzen Bereiche 102a und 102b sind die Innenseiten der über den Schraubverbinder 104 hinausragenden Bereiche der Hülse 102, die im montierten Zustand über der Isolierung der Leiter liegen. In der Figur ist deutlich zu erkennen, dass die Wandstärke der Bereiche 102a und 102b der Hülse 102 gegenüber der Wandstärke des dazwischen liegenden Bereichs kleiner ist. Dies dient vor allem dazu, die Verformbarkeit dieser Bereiche zu verbessern.

Figur 3 zeigt einen Längsschnitt durch eine Ausführungsform des erfindungsgemäßen Verbindungselements 100 aus Figur 1, bei der die über den Schraubverbinder 104 hinausragenden Bereiche der Hülse 102 zur Mitte des Schraubverbinders 104 hin zurückgeklappt sind. Dies kann beispielsweise dann vorteilhaft sein, wenn Zentrierringe oder Unterlagen in eine der Aufnahmen 104a oder 104b eingebracht werden sollen, um einen Leiter mit erheblich kleinerem Querschnitt als dem der Öffnung der Aufnahme so zu positionieren, dass Asymmetrien des elektrischen Feldes verringert oder vermieden werden. Das Zurückklappen kann vor Ort bei der Montage erfolgen, es ist allerdings auch möglich das Verbindungselement 100 bereits ab Werk mit zurückgeklappten Bereichen 102a, 102b der Hülse 102 auszuliefern. Die übrigen in der Figur gezeigten Elemente entsprechen denen aus Figur 2. Die im Vergleich zum Rest der Hülse 102 geringere Wandstärke der zurückgeklappten Bereiche begünstigt das Zurückklappen. Vorteilhafterweise weist das Material der Hülse außerdem eine gewisse Elastizität auf.

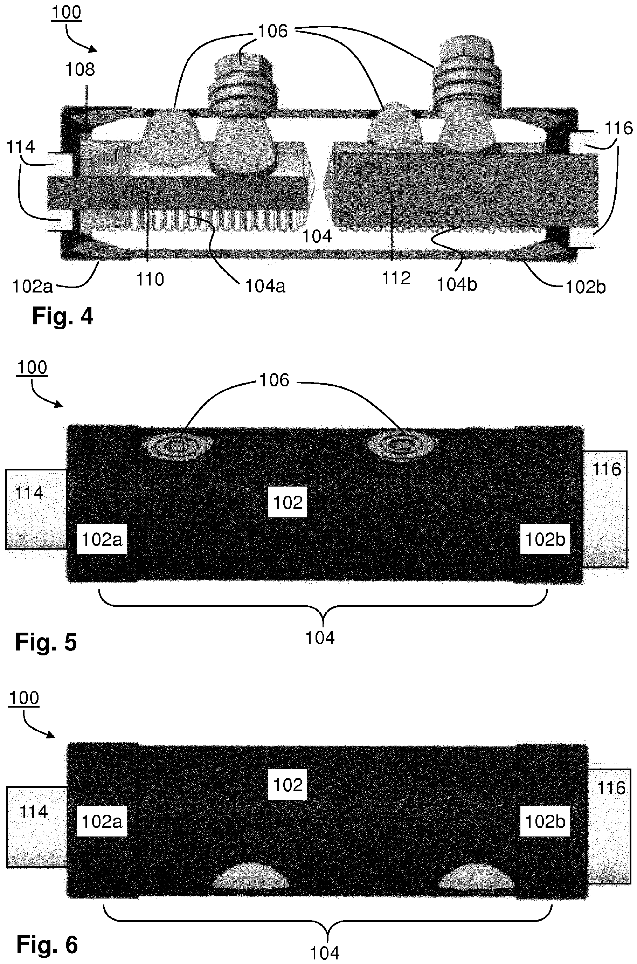

Figur 4 zeigt einen Längsschnitt durch die Ausführungsform des erfindungsgemäßen Verbindungselements 100 aus Figur 3 mit in die Aufnahmen 104a, 104b des Schraubverbinders 104 eingeführten Leitern 110, 112. Leiter 110 weist einen kleineren Durchmesser oder Querschnitt auf als Leiter 112, daher ist ein Zentrierring 108 in der Aufnahme 104a positioniert, so dass der Leiter näher zu der Längsachse des Schraubverbinders 104 aus diesem heraustritt, wodurch das elektrische Feld in diesem Bereich weniger asymmetrisch ist als ohne den Zentrierring 108. An den beiden Enden des Verbindungselements ist noch die die Leiter umgebende Isolierung 114, 116 angedeutet.

Figur 5 zeigt das erfindungsgemäße Verbindungselement aus Figur 4 nach dem Eindrehen und Abreißen der Schrauben 106. In der Figur sind die nach dem Eindrehen weitgehend bündig mit der Oberfläche des Schraubverbinders 104 abgescherten Schrauben 106 erkennbar, sowie die für die Schrauben vorgesehenen Öffnungen in der Hülse 102. Im Bereich der Schrauben 106 sind scharfkantige Konturen erkennbar, außerdem Stellen, an denen sich Lufteinschlüsse bilden können. In der Figur sind ebenfalls noch die Isolierungen 114, 116 der mit dem Verbindungselement verbundenen Kabel angedeutet. Die über den Schraubverbinder 104 hinausragenden Bereiche 102a, 102b der Hülse 102 sind nach wie vor zurückgeklappt.

Figur 6 zeigt das erfindungsgemäße Verbindungselement 100 aus Figur 5 nach dem Drehen der Hülse 102. in der Figur ist deutlich erkennbar, dass die in dem Schraubverbinder 104 verbleibenden Teile, die unter Umständen scharfkantige Konturen aufweisen oder Lufteinschlüsse bilden können, durch die Hülse 102 abgedeckt sind, sodass das Verbindungselement 100 dort eine glatte Oberfläche aufweist. Die Öffnungen oder Durchbrüche in der Hülse 102 liegen über einem Bereich des Schraubverbinders 104, der eine glatte Außenfläche aufweist. Wie in Figur 5 sind die Isolierungen 114, 116 der mit dem Verbindungselement 100 verbundenen Kabel angedeutet, und die über den Schraubverbinder 104 hinausragenden Bereiche 102a, 102b der Hülse 102 sind nach wie vor zurückgeklappt.

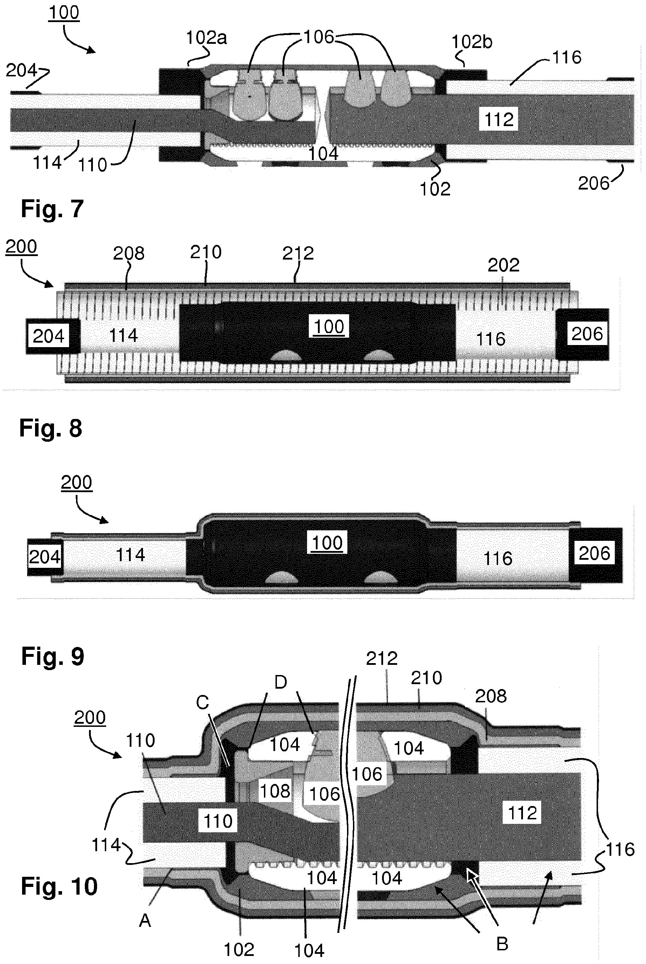

Figur 7 zeigt einen Längsschnitt durch eine Leiterverbindung mit dem erfindungsgemäßen Verbindungselement 100 aus Figur 4. In Figur 7 sind die von den beiden Seiten in das Verbindungselement 100 eingeführten Kabel mit ihren Isolierungen 114, 116 gezeigt. Außerdem ist erkennbar, dass die Schrauben 106 die Leiter 110, 112 der Kabel in den jeweiligen Aufnahmen des Schraubverbinders 104 festklemmen. Die über den Schraubverbinder 104 hinausragenden Bereiche 102a, 102b, der Hülse 102 sind in Figur 7 wieder vorgeklappt und erstrecken sich über die Enden der Isolierungen der Kabel. Die Öffnungen in der Hülse 102, durch welche die Schrauben 106 in den Schraubverbinder eingedreht wurden, liegen nach dem Drehen der Hülse nunmehr auf der Unterseite der Anordnung. Dies ist in der Figur durch die an der Unterseite unterbrochene Kontur der Hülse 102 angedeutet.

Figur 8 zeigt die in einer im Längsschnitt dargestellten kaltschrumpfenden Muffe 200 positionierte Leiterverbindung mit dem Verbindungselement 100 aus Figur 7. Die Muffe 200 erstreckt sich zu beiden Seiten bis über äußere leitfähige Schichten 204, 206 der miteinander verbundenen Kabel. Im Innern der Muffe 200 ist ein Stützelement 202 als spiralförmiges Gebilde angedeutet, welches die Muffe 200 im ungeschrumpften Zustand radial nach außen aufspannt. Der Schichtaufbau der rohrförmigen Muffe 200 ist in Figur 8 ebenfalls zu erkennen: Über dem Stützelement 202 liegt zunächst eine erste innere Schicht 208 aus einem fließfähigen und/oder leicht verformbaren feldsteuernden Material. Über der ersten inneren Schicht 208 ist eine elektrische Isolierschicht 210 angeordnet. Über der elektrischen Isolierschicht 210 liegt eine elektrisch leitfähige Feldbegrenzungsschicht 212. Die Schichten der Muffe 200 sind so gestaltet, dass sie sich nach dem Entfernen des Stützelements 202 radial nach innen zusammenziehen und eng an die in der Muffe 200 aufgenommenen Elemente der Leiterverbindung anlegen und deren Konturen folgen.

Figur 9 zeigt die in einer im Längsschnitt dargestellten kaltschrumpfenden Muffe 200 positionierte Leiterverbindung mit dem Verbindungselement 100 aus Figur 7 nach dem Schrumpfen. Die in der Figur dargestellten Elemente sind bis auf das entfernte Stützelement 202 mit denen aus Figur 8 identisch. Deutlich zu erkennen ist, wie sich die radial nach innen zusammengezogene Muffe 200 an die von ihr eingeschlossenen Elemente angelegt hat und deren Konturen folgt. Insbesondere ist zu erkennen, wie die Muffe 200 beim Zusammenziehen die über den Schraubverbinder 104 hinausragenden Bereiche der Hülse 102 ebenfalls radial zusammengedrückt hat, sodass sie an den Isolierungen 114, 116 der Leiter 110, 112 anliegt. Die Muffe ist dabei so ausgestaltet, dass auch im Zustand, wenn die Muffe an den umschlossenen Komponenten anliegt, eine radial nach innen wirkende Kraft bestehen bleibt.

Innerhalb der elektrisch leitfähigen Hülse, die wie ein Faraday'scher Käfig wirkt und elektrisch leitend an dem Schraubverbinder anliegt, besteht kein elektrisches Feld. An den Übergängen zwischen der Hülse und den elektrischen Isolierungen 114, 116 sowie zwischen den elektrischen Isolierungen 114, 116 und den darüber liegenden leitfähigen Schichten der Kabel bewirkt das fließfähige und/oder leicht verformbaren feldsteuernde Material der ersten inneren Schicht 208 der Muffe 200 eine Feldsteuerung, so dass die Feldstärken elektrischer Felder soweit verringert werden, dass kein elektrischer Durchschlag erfolgen kann.

Figur 10 zeigt Längsschnitte durch Details der Leiterverbindung aus Figur 7 an den Enden des Verbindungselements 100. Der besseren Übersichtlichkeit halber sind nur die beiden Enden des Schraubverbinders 104 mit den sie umgebenden Komponenten dargestellt. Die Leiter 110, 112 sind in den entsprechenden Aufnahmen des Schraubverbinders 104 aufgenommen und durch die eingedrehten Schrauben 106 fixiert und kontaktiert. Der Leiter 110 weist einen kleineren Querschnitt auf als der Leiter 112, daher ist er durch den Zentrierring 108 geführt. Die beiden Leiter 110, 112 sind von Isolierungen 114, 116 umhüllt, die in einem geringen Abstand von dem Schraubverbinder 104 enden. Die den Schraubverbinder 104 umgebende Hülse 102 liegt im Bereich des Endes der Isolierungen 114, 116 an diesen an und umhüllt sie. Die Hülse 102 umhüllt auch die Bereiche des Schraubverbinders 104, welche scharfe Kanten aufweisen, an denen hohe elektrische Feldstärken auftreten könnten, in der Figur mit D bezeichnet. Ebenfalls von der Hülse 102 umhüllt sind die Bereiche, in denen sich Lufteinschlüsse befinden können, in der Figur mit C bezeichnet, in deren Bereich ebenfalls hohe elektrische Feldstärken auftreten können. An der Hülse 102 sowie den Isolierungen 114, 116 der Leiter liegt mit einer radial nach innen wirkenden Kraft die kaltschrumpfende Muffe 200 an. Dabei hat sich die erste innere feldsteuernde Schicht 208 aufgrund der nach innen wirkenden Kraft an die Konturen der darunterliegenden Komponenten durch Verformen und/oder Fließen angepasst, sodass keine Lufteinschlüsse vorhanden sind. Die innerhalb der Hülse 102 liegenden Bereiche weisen kein elektrisches Feld auf, in der Figur mit B bezeichnet. Ein solches elektrisches Feld kann erst am Übergang von der Hülse zu den Isolierungen 114, 116 der Leiter auftreten, in der Figur mit A bezeichnet. An dieser Stelle wirkt jedoch die feldsteuernde Schicht 208 zusammen mit der darüberliegenden Isolierschicht 210. So dass unzulässig hohe elektrische Feldstärken verhindert werden. Die Außenseite der Muffe 200 ist von der Feldbegrenzungsschicht 112 umhüllt.

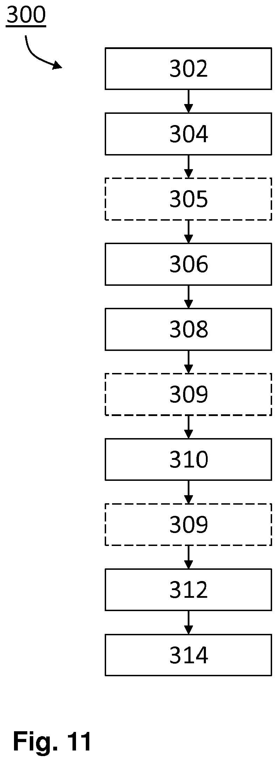

Figur 11 zeigt ein exemplarisches Flussdiagramm eines Verfahrens 300 zur Verbindung von Energiekabeln mit einer erfindungsgemäßen Verbindungsgarnitur. In Schritt 302 werden zunächst die die Leiter 110, 112 zweier zu verbindender Energiekabel umgebende Isolierung 114, 116 sowie gegebenenfalls weitere die Leiter umgebende Schichten abgesetzt bzw. abgeschält. Danach wird in Schritt 304 eine kaltschrumpfende Muffe 200 über eines der Kabelenden geschoben, so dass der freigelegte Leiter dieses Kabelendes aus der Muffe 200 herausragt. Nun werden in Schritt 306 die zu verbindenden Leiter 110, 112 in einen Schraubverbinder 104 eines Verbindungselement 100 eingeführt, so dass über den Schraubverbinder 104 hinausragende Bereiche 102a, 102b einer den Schraubverbinder 104 umgebenden Hülse 102 über den jeweiligen Isolierungen 114, 116 der Leiter 110, 112 zu liegen kommen. Optional in können in einem davor liegenden Schritt 305 einer oder beide der über den Schraubverbinder 104 hinausragenden Bereiche 102a, 102b der Hülse 102 zur Mitte des Schraubverbinders 104 zurückgeklappt werden, um beispielsweise das Einführen eines Zentrierrings 108 oder einer Unterlage in die entsprechende Aufnahme des Schraubverbinders 104 zu erleichtern. Nach dem Einführen der Leiter 110, 112 in den Schraubverbinder 104 werden die Schrauben in Schritt 308 in den Schraubverbinder 104 eingedreht, um die Leiter 110, 112 in dem Schraubverbinder 104 zu fixieren und zu kontaktieren. Die Schrauben werden dabei so weit eingedreht, bis sie abscheren oder nicht mehr über die Kontur des Schraubverbinders 104 hinausragen. Anschließend wird in Schritt 310 die Hülse 102 Schraubverbinder 104 gedreht, sodass die Schrauben 106 aufnehmende Bereiche des Schraubverbinders 104 von der Hülse 102 überdeckt sind und die Öffnungen der Hülse, durch welche die Schrauben 106 durchgeführt waren, über einem glatten Bereich des Schraubverbinders 104 liegen. Sofern zuvor einer oder beide der über den Schraubverbinder 104 hinausragenden Bereiche 102a, 102b der Hülse 102 zur Mitte des Schraubverbinders 104 zurückgeklappt waren können diese in Schritt 309 vor oder nach dem Drehen 310 der Hülse 102 wieder vorgeklappt werden, sodass sie über den Isolierungen zu liegen kommen. Nun wird in Schritt 312 die Muffe 200 über dem Verbindungselement 100 positioniert und in Schritt 314 ein Stützelement 202 der Muffe 200 entfernt, sodass die Muffe 200 sich radial nach innen zusammenzieht. Dabei drückt eine durch die sich zusammenziehende Muffe 200 ausgeübte Kraft die über den Schraubverbinder 104 hinausragenden Bereiche 102a, 102b der Hülse 102 radial zusammen und gegen die Isolierungen 114, 116 der Leiter 110, 112. Die Kraft bewirkt dabei ein Fließen einer ersten inneren feldsteuernden Schicht 208 der Muffe 200 in die Öffnungen der Hülse 102, durch welche die Schrauben 106 in den Schraubverbinder 104 hindurchgeführt waren.

### Bezugszeichenliste

- 100: Verbindungselement
- 102: Hülse
- 102a,b: äußerer Hülsenbereich
- 104: Schraubverbinder
- 104a,b: Aufnahme für Leiter
- 106: Schraube
- 108: Zentrierring
- 110: Leiter
- 112: Leiter
- 114: Isolierung
- 116: Isolierung
- 200: Muffe
- 202: Stützelement
- 204: leitfähige Schicht
- 206: leitfähige Schicht
- 208: feldsteuernde Schicht
- 210: elektrische Isolierschicht
- 212: Feldbegrenzungsschicht

## Patentansprüche

1. Verbindungselement (100) einer Verbindungsgarnitur für Energiekabel umfassend:
- einen elektrisch leitenden Schraubverbinder (104), der dazu eingerichtet ist, an zwei gegenüberliegenden Enden jeweils einen Leiter (110, 112) zweier zu verbindender Energiekabel aufzunehmen und mittels radial in den Schraubverbinder (104) einschraubbarer Schrauben (106) elektrisch stromtragfähig zu kontaktieren und zu fixieren,
- eine an dem elektrisch leitenden Schraubverbinder (104) anliegende und diesen an beiden Enden offen umhüllende Hülse (102), deren Länge größer ist als die des Schraubverbinders (104), und die zumindest in den über den Schraubverbinder (104) hinausragenden Bereichen (102a, 102b) radial verformbar ist, wobei die Hülse (102) in einem die Schrauben (106) aufnehmenden Bereich des Schraubverbinders (104) Öffnungen aufweist, durch welche die Schrauben (106) in den Schraubverbinder (104) eindrehbar sind;
**dadurch gekennzeichnet, dass** die Hülse (102) elektrisch leitfähig und um eine Längsachse des elektrisch leitenden Schraubverbinders (104) beweglich ist.

2. Verbindungselement (100) nach Anspruch 1, wobei die über den Schraubverbinder (104) hinausragenden Bereiche (102a, 102b) der Hülse (102) über den Schraubverbinder (104) zu dessen Mitte hin zurückklappbar sind.

3. Verbindungselement (100) nach Anspruch 1 oder 2, wobei die Hülse aus einem leitfähigen Elastomer besteht, und die über den Schraubverbinder hinausragenden Bereiche der Hülse plastisch oder elastisch verformbar sind.

4. Verbindungsgarnitur für Energiekabel mit einem Verbindungselement (100) nach einem der Ansprüche 1 bis 3 und einer kaltschrumpfenden Muffe (200), die ein entfernbares, innenliegendes Stützelement (202) aufweist, welches die Muffe (200) radial nach außen spannt und in eine zylindrische Grundform bringt, wobei die Muffe (200) eine außen auf dem Stützelement (202) angeordnete erste innere Schicht (208) aus einem fließfähigen und/oder leicht verformbaren, feldsteuernden Material aufweist, über der eine elektrische Isolierschicht (210) angeordnet ist, und wobei über der elektrischen Isolierschicht (210) eine elektrisch leitfähige Feldbegrenzungsschicht (212) angeordnet ist.

5. Verbindungsgarnitur nach Anspruch 4, wobei zwischen der ersten, inneren Schicht (208) und der elektrischen Isolierschicht (210) der kaltschrumpfenden Muffe (200) eine zweite feldsteuernde Schicht angeordnet ist.

6. Verbindungsgarnitur nach Anspruch 4 oder 5, wobei die Schichten der kaltschrumpfenden Muffe (200) mittels Co-Extrusion in einem Arbeitsgang herstellbar sind.

7. Verfahren (300) zur Verbindung von Energiekabeln mit einer Verbindungsgarnitur nach einem der Ansprüche 4 bis 6, umfassend:
- Absetzen (302) der die Leiter (110, 112) zweier zu verbindender Energiekabel umgebenden Isolierung (114, 116) und ggf. weiterer Schichten,
- Aufschieben (304) der kaltschrumpfenden Muffe (200) über eines der Kabelenden, so dass der freigelegte Leiter (110, 112) aus der Muffe (200) herausragt,
- Einführen (306) der zu verbindenden Leiter (110, 112) in den Schraubverbinder (104) des Verbindungselements (100), so dass die über den Schraubverbinder (104) hinausragenden Bereiche (102a, a02b) der den Schraubverbinder (104) umgebenden Hülse (102) über den jeweiligen Isolierungen (114, 116) der Leiter (110, 112) zu liegen kommen, und Eindrehen (308) der Schrauben (106) des Verbindungselements (100) bis sie abscheren oder nicht mehr über die Kontur des Schraubverbinders (104) hinausragen,
- Drehen (310) der Hülse (102) um den Schraubverbinder (104), so dass die Schrauben (106) aufnehmende Bereiche des Schraubverbinders (104) von der Hülse (102) überdeckt sind und die Öffnungen in der Hülse (102), durch welche die Schrauben (106) hindurchgeführt waren, über einem glatten Bereich des Schraubverbinders (104) liegen,
- Positionieren (312) der Muffe (200) über dem Verbindungselement (100), und
- Entfernen (314) des Stützelements (202) der Muffe (200), so dass die Muffe (200) sich radial nach innen zusammenzieht, wobei eine durch die sich zusammenziehende Muffe (200) ausgeübte Kraft die über den Schraubverbinder (104) hinausragenden Bereiche (102a, 102b) der Hülse (102) radial zusammendrücken und gegen die Isolierungen (114, 116) der Leiter (110, 112) drücken, und wobei die Kraft ein Fließen oder Verlagern eines Teils der ersten inneren feldsteuernden Schicht (208) der Muffe (200) in die Öffnungen der Hülse (102) bewirkt, durch welche die Schrauben (106) in den Schraubverbinder (104) hindurchgeführt waren.

8. Verfahren (300) nach Anspruch 7, vor dem Einführen (306) der zu verbindenden Leiter (110, 112) in den Schraubverbinder (104) des Verbindungselements (100) außerdem umfassend, falls die über den Schraubverbinder (104) hinausragenden Bereiche (102a, 102b) der Hülse (102) nicht bereits zurückgeklappt sind:
- Zurückklappen (305) der über den Schraubverbinder (104) hinausragenden Bereiche (102a, 102b) der Hülse (102) zur Mitte des Schraubverbinders (104).

9. Verfahren (300) nach Anspruch 7 oder 8, nach dem Eindrehen (308) der Schrauben (106) oder nach dem Drehen (310) der Hülse (102) um den Schraubverbinder (104), außerdem umfassend, sofern die über den Schraubverbinder (104) hinausragenden Bereiche (102a, 102b) der Hülse (102) zurückgeklappt sind:
- Vorklappen (309) der zurückgeklappten Bereiche der Hülse (102), so dass die Enden der Hülse (102) über den Isolierungen (114, 116) der Leiter (110, 112) liegen.

## Claims

1. A connecting element (100) of a connection fitting for energy cables comprising:
- an electrically conductive screw connector (104), which is configured at two opposite ends in each case to receive a conductor (110, 112) of two energy cables to be connected and to make electrical current-carrying contact with it and to fix it by means of screws (106) that can be screwed radially into the screw connector (104),
- a sleeve (102) resting against the electrically conductive connector (104) and openly enveloping it at both ends, the length of which sleeve is greater that that of the screw connector (104), and which can be radially deformed at least in the regions (102a, 102b) protruding beyond the screw connector (104), wherein the sleeve (102) has openings in a region of the screw connector (104) receiving the screws (106), through which the screws (106) can be screwed into the screw connector (104);
**characterized in that** the sleeve (102) is electrically conductive and is movable about a longitudinal axis of the electrically conductive screw connector (104).

2. The connecting element (100) according to claim 1, wherein the regions (102a, 102b) of the sleeve (102) protruding beyond the screw connector (104) can be folded back over the screw connector (104) towards its center.

3. The connecting element (100) according to Claim 1 or 2, wherein the sleeve consists of a conductive elastomer, and the regions of the sleeve protruding beyond the screw connector are plastically and elastically deformable.

4. A connection fitting for energy cables having a connecting element (100) according to any one of claims 1 to 3 and having a cold-shrinking sleeve (200), which has a removable, internal support element (202), which tensions the sleeve (200) radially outward and brings it into a cylindrical base shape, wherein the sleeve (200) has a first inner layer (208) arranged on the outside of the support element (202), said layer made of a flowable and/or easily deformable, field-controlling material, over which an electric insulation layer (210) is arranged, and wherein an electrically conductive field boundary layer (212) is arranged over the electrical insulation layer (210).

5. The connection fitting according to claim 4, wherein between the first, inner layer (208) and the electrical insulation layer (210) of the cold-shrinking sleeve (200) a second field-controlling layer is arranged.

6. The connection fitting according to claim 4 or 5, wherein the layers of the cold-shrinking sleeve (200) can be produced by means of co-extrusion in one work step.

7. A method (300) for connecting energy cables with a connection fitting according to any one of claims 4 to 6, comprising:
- Removing (302) the insulation (114, 116) surrounding the conductors (110, 112) of two energy cables to be connected and if necessary, further layers,
- sliding (304) the cold-shrinking sleeve (200) over one of the cable ends, so that the exposed conductor (110, 112) protrudes from the sleeve (200),
- inserting (306) the conductors (110, 112) to be connected into the screw connector (104) of the connecting element (100), so that the regions (102a, 102b) of the sleeve surrounding the screw connector (104), which regions protrude beyond the screw connector (104), come to rest over the respective insulations (114, 116) of the conductors (110, 112), and screwing in (308) the screws (106) of the connecting element (100) until they shear off or no longer protrude beyond the contour of the screw connector (104),
- turning (310) the sleeve (102) around the screw connector (104), so that the regions of the screw connector (104) receiving the screws (106) are covered by the sleeve (102) and the openings in the sleeve (102), through which the screws (106) were passed, lie over a smooth region of the screw connector (104).
- positioning (312) the sleeve (200) over the connecting element (100), and
- removing (314) the support element (202) of the sleeve (200), so that the sleeve (200) contracts radially inward, wherein a force exerted by the contracting sleeve (200) radially compresses the regions (102a, 102b) of the sleeve (102), which regions protrude over the screw connector (104), and press against the insulations (114, 116) of the conductors (110, 112), and wherein the force causes a flow or displacement of a part of the first inner field-controlling layer (208) of the sleeve (200) into the openings of the sleeve (102), through which openings the screws (106) were passed into the screw connector (104).

8. The method (300) according to claim 7, before the insertion (306) of the conductors (110, 112) to be connected into the screw connector (104) of the connecting element (100) also comprising, if the regions (102a, 102b) of the sleeve (102), which regions protrude beyond the screw connector (104), are not already folded back:
- Folding back (305) the regions (102a, 102b) of the sleeve (102), which regions protrude beyond the screw connector (104), to the center of the screw connector (104).

9. The method (300) according to claim 7 or 8, after screwing in (308) the screws (106) or after turning (310) the sleeve (102) around the screw connector (104), also comprising, provided the regions (102a, 102b) of the sleeve (102), which regions protrude beyond the screw connector (104), are folded back:
- Folding forward (309) the folded-back regions of the sleeve (102), so that the ends of the sleeve (102) lie over the insulations (114, 116) of the conductors (110, 112).

## Revendications

1. Élément de liaison (100) d'une garniture de liaison pour des câbles d'alimentation, comprenant :
- un connecteur vissé électro-conducteur (104) qui est conçu pour loger, au niveau des deux extrémités opposées, un conducteur (110, 112), deux câbles d'alimentation à relier et pour les mettre en contact et les fixer de manière électro-conductrice au moyen de vis (106) pouvant être vissées dans le connecteur vissé (104),
- une douille (102) s'appuyant contre le connecteur vissé électro-conducteur (104) et entourant celui-ci de manière ouverte aux deux extrémités, dont la longueur est supérieure à celle du connecteur vissé (104) et qui est déformable radialement dans au moins les parties (102a, 102b) dépassant du connecteur vissé (104), dans lequel la douille (102) comprend, dans une partie du connecteur vissé (104) logeant les vis (106), des ouvertures à travers lesquelles les vis (106) peuvent être tournées dans le connecteur vissé (104) ;
**caractérisé en ce que** la douille (102) est électro-conductrice et est mobile autour d'un axe longitudinal du connecteur vissé électro-conducteur (104).

2. Élément de liaison (100) selon la revendication 1, dans lequel les parties (102a, 102b), dépassant du connecteur vissé (104), de la douille (102) peuvent être rabattus sur le connecteur vissé (104) vers son centre.

3. Élément de liaison (100) selon la revendication 1 ou 2, dans lequel la douille est constitué d'un élastomère électro-conducteur et les parties de la douille dépassant du connecteur vissé sont déformables plastiquement ou élastiquement.

4. Garniture de liaison pour câbles d'alimentation avec un élément de liaison (100) selon l'une des revendications 1 à 3 et un manchon rétractable à froid (200), qui comprend un élément d'appui interne amovible (202), qui serre le manchon (200) radialement vers l'extérieur et l'amène vers une forme de base cylindrique, dans lequel le manchon (200) comprend une première couche interne (208), disposée sur l'élément d'appui (202), constituée d'un matériau fluide et/ou facilement déformable, contrôlant le champ, au-dessus de laquelle est disposée une couche d'isolation électrique (210) et dans lequel, au-dessus de la couche d'isolation électrique (210), est disposée une couche de limitation de champ électro-conductrice (212).

5. Garniture de liaison selon la revendication 4, dans lequel, entre la première couche interne (208) et la couche d'isolation électrique (210) du manchon rétractable à froid (200), est disposée une deuxième couche de contrôle du champ.

6. Garniture de liaison selon la revendication 4 ou 5, dans lequel les couches du manchon rétractable à froid (200) peuvent être réalisées par co-extrusion dans une étape de travail.

7. Procédé (300) pour la liaison de câbles d'alimentation avec une garniture de liaison selon l'une des revendications 4 à 6, comprenant :
- dépose (302) de l'isolation (114, 116) entourant les conducteurs (110, 112) de deux câbles d'alimentation à relier et, le cas échéant, d'autres couches,
- repoussage (304) du manchon rétractable à froid (200) au-dessus d'une des extrémités du câble, de façon à ce que le conducteur dénudé (110, 112) dépasse hors du manchon (200),
- introduction (306) des conducteurs à relier (110, 112) dans le connecteur vissé (104) de l'élément de liaison (100), de façon à ce que les parties (102a, 102b), dépassant du connecteur vissé (104), de la douille (102) entourant le connecteur vissé (104) repose sur les isolations (114, 116) respectives des conducteurs (110, 112) et rotation vers l'intérieur (308) des vis (106) de l'élément de liaison (100) jusqu'à ce qu'elles soient cisaillées ou ne dépassent plus du contour du connecteur vissé (104),
- rotation (310) de la douille (102) autour du connecteur vissé (104), de façon à ce que les parties du connecteur vissé (104) logeant les vis (106) sont recouvertes par la douille (102) et les ouvertures dans la douille (102), à travers lesquelles les vis (106) sont guidées, se trouvent au-dessus d'une partie lisse du connecteur vissé (104),
- positionnement (312) du manchon (200) au-dessus de l'élément de liaison (100) et
- retrait (314) de l'élément d'appui (202) du manchon (200), de façon à ce que le manchon (200) se rétracte radialement vers l'intérieur, dans lequel une force exercée par le manchon se rétractant (200) comprime radialement les parties (102a, 102b) de la douille (102) dépassant du connecteur vissé (104) et comprime les isolations (114, 116) des conducteurs (110, 112) et dans lequel la force provoque un fluage ou un déplacement d'une partie de la première couche interne de contrôle du champ (208) du manchon (200) dans les ouvertures de la douille (102), à travers lesquelles les vis (106) sont guidées vers le connecteur vissé (104).

8. Procédé (300) selon la revendication 7, comprenant en outre, avant l'introduction (306) des conducteurs à relier (110, 112) dans le connecteur vissé (104) de l'élément de liaison (100), dans le cas où les parties (102a, 102b) de la douille (102) dépassant du connecteur vissé (104) ne sont pas déjà rabattues vers l'arrière :
- rabattage vers l'arrière (305) des parties (102a, 102b) de la douille (102) dépassant du connecteur vissé (104) vers le centre du connecteur vissé (104).

9. Procédé (300) selon la revendication 7 ou 8, comprenant en outre, après la rotation vers l'intérieur (308) des vis (106) ou après la rotation (310) de la douille (102) autour du connecteur vissé (104), si les parties (102a, 102b) de la douille (102) dépassant du connecteur vissé (104) sont rabattues vers l'arrière :
- rabattage vers l'avant (309) des parties rabattues vers l'arrière de la douille (102), de façon à ce que les extrémités de la douille (102) se trouvent au-dessus des isolations (114, 116) des conducteurs (110, 112).
